# FASCICULE DE BREVET EUROPEEN

(11) **EP 1 401 973 B1**
(45) Date de publication et mention de la délivrance du brevet: **17.09.2008**
(21) Numéro de dépôt: 02704858.6
(22) Date de dépôt: 18.02.2002
(51) Int. Cl.: C09D 153/00

(54) **UTILISATION DE COPOLYMERES A BLOCS A CARACTERE AMPHIPHILE COMME PROMOTEURS D'ADHESION DE COMPOSITIONS AQUEUSES FILMOGENES SUR UNE SURFACE DE FAIBLE ENERGIE**
ANWENDUNG VON AMPHIPHILEN BLOCKCOPOLYMEREN ALS HAFTVERMITTLER FÜR FILMBILDENDE WÄSSRIGE ZUSAMMENSTZUNGEN AUF OBERFLÄCHEN MIT NIEDRIGER OBERFLÄCHENENERGIE
USE OF AN AMPHIPHILIC BLOCK COPOLYMER AS ADHESION PROMOTERS OF FILM-FORMING AQUEOUS COMPOSITIONS ON A LOW-ENERGY SURFACE

(30) Priorité: 26.02.2001 US 793169; 04.05.2001 US 288844 P
(43) Date de publication de la demande: 31.03.2004
(73) Titulaire: RHODIA CHIMIE, 92512 Boulogne Billancourt Cedex (FR)
(72) Inventeur: QUEVAL, Lionel, F-95600 EAUBONNE (FR); BONNET-GONNET, Cécile, F-75004 PARIS (FR); DESTARAC, Mathias, F-75005 PARIS (FR)
(74) Mandataire: Bernasconi, Jean Raymond
(86) Numéro de dépôt international: PCT/FR2002/000615
(87) Numéro de publication internationale: WO 2002/068550

(56) Documents cités:
- EP-A- 0 887 362
- EP-A- 1 086 980
- GB-A- 2 334 255
- US-A- 4 929 510
- US-A- 5 272 201
- US-A- 5 851 590
- DATABASE WPI Section Ch, Week 199351 Derwent Publications Ltd., London, GB; Class A14, AN 1993-410964 XP002240338 & JP 05 310972 A (NIPPON OILS & FATS CO LTD), 22 novembre 1993 (1993-11-22)
- DATABASE WPI Section Ch, Week 198607 Derwent Publications Ltd., London, GB; Class A14, AN 1986-045845 XP002240339 & JP 61 000239 A (MITSUBISHI MONSANTO KK), 6 janvier 1986 (1986-01-06)
- DATABASE WPI Section Ch, Week 198626 Derwent Publications Ltd., London, GB; Class A14, AN 1986-165861 XP002240340 & JP 61 098746 A (MITSUBISHI KASEI VINYL KK), 17 mai 1986 (1986-05-17)

## Description

La présente invention concerne l'utilisation d'un copolymère à blocs à caractère amphiphile, comportant au moins un bloc hydrophile et au moins un bloc hydrophobe, à titre d'additifs pour compositions aqueuses filmogènes, notamment de type peinture, latex, ou mastic éventuellement siliconé pour assurer ou promouvoir l'adhésion de ces compositions sur une surface de faible énergie telle qu'une surface à base d'un polymère plastique ou thermoplastique.

L'invention concerne également les compositions aqueuses filmogènes comprenant ces copolymères à blocs à caractère amphiphile.

Par surface de faible énergie au sens de l'invention, on entend des matériaux présentant une faible affinité pour l'eau, ce qui se traduit par une mouillabilité faible, voire nulle.

Cette mouillabilité est évaluée par la mesure de l'angle de contact d'une goutte d'eau déposée sur la surface du matériau. Cet angle de contact, généralement dénommé angle alpha, correspond à l'angle existant entre la surface et la tangente à la goutte à l'interface surface/eau/air et peut être mesuré notamment à l'aide d'un appareil de mesure d'angle de contact usuel, tel que par exemple le SDT-200 commercialisé par la société IT Concept, utilisé en mode statique.

Les plaques doivent être parfaitement propres c'est à dire frottées préalablement à l'éthanol. De plus, elles sont reconditionnées, c'est-à-dire maintenues pendant 24 heures dans des conditions de température et d'humidité particulière dans une salle climatisée (22 °C, 55% d'humidité relative).

Cet angle peut être compris entre 0 et 180°.
- Si l'angle est nul, alors le mouillage est total. Le liquide s'étale complètement sur la surface et il existe donc des interactions fortes entre le support et le liquide.
- Si l'angle est de 180° alors le mouillage est nul. Le liquide forme une bille. Il n'y a qu'un point de contact entre le liquide et le support et surtout aucune affinité.
- Pour des angles intermédiaires, le mouillage est partiel.

Ainsi on considère que lorsque cet angle de contact est supérieur à 45°, alors le matériau a une surface de faible énergie.

De façon générale les matériaux de faible énergie possèdent un caractère hydrophobe. Par surface de nature "hydrophobe", on entend, au sens de l'invention, une surface caractérisée par un angle de contact d'une goutte d'eau supérieure ou égale à 45° et généralement supérieure à 70°. Le terme "hydrophile" est quant à lui employé pour désigner une surface caractérisée par un angle de contact d'une goutte d'eau inférieure à 45°, de préférence inférieure ou égale à 30°.

On peut citer à titre d'exemple de matériaux ayant une surface de faible énergie les polymères plastiques ou thermoplastiques tels que les polyamides, les polycarbonates, les polyéthylène-téréphtalate, le polyméthacrylate de méthyle, les polypropylènes, les polyéthylènes, les polystyrènes, les polyesters, l'acrylonitrile butadiène styrène (ABS) ou les polychlorures de vinyle.

Le tableau I de l'exemple 4 regroupe à titre illustratif les valeurs mesurées de l'angle alpha pour ces matériaux.

Ainsi, lorsqu'on applique directement sur la surface d'un de ces matériaux une composition aqueuse filmogène de type peinture ou mastic éventuellement siliconé on observe un très mauvais mouillage de la surface par la composition aqueuse, ce qui rend impossible l'application de cette composition, ou bien conduit, dans le meilleurs des cas, à l'obtention d'un revêtement de qualité médiocre.

De plus, les propriétés d'adhésion des revêtements ainsi obtenus se dégradent en présence d'humidité ou de contact avec l'eau de ces surfaces, notamment en raison de phénomènes de diffusion de l'eau à l'interface.

Pour l'ensemble de ces raisons, le dépôt d'une composition aqueuse filmogène de type peinture ou mastic éventuellement siliconé sur un support de faible énergie de surface, de type polymère plastique ou thermoplastique, n'est généralement pas envisageable au niveau industriel.

Or, la Demanderesse a découvert que certains copolymères à blocs à caractère amphiphile peuvent être utilisés à titre d'additifs au sein d'une composition aqueuse filmogène pour assurer ou promouvoir l'adhésion de ces compositions sur des surfaces de faible énergie.

Les modifications de propriétés d'adhésion des compositions aqueuses filmogènes induites par la présence de ces copolymères à blocs permettent de palier aux problèmes rencontrés jusque là, et il est possible d'obtenir une amélioration de l'efficacité de l'application d'une composition aqueuse filmogène de type peinture ou mastic, mais également une amélioration de l'adhésion sur le support de cette composition aqueuse filmogène effective et durable, même en présence d'eau.

Cette amélioration de l'adhésion du revêtement se traduit par un effet décoratif, protecteur ou fonctionnel prolongé, avantageusement pendant toute la durée de vie du produit, sans que l'effet induit par le revêtement réalisé ne soit susceptible d'être remis en cause par un lavage avec une solution aqueuse (S) de pH compris entre 1 et 12, comprenant éventuellement du chlorure de sodium, à raison d'une concentration maximale de 10M, un pelage ou une désagrégation dudit revêtement, notamment sous l'effet de contraintes mécaniques.

De façon plus générale, la présence de ces copolymères à blocs de l'invention au sein des compositions aqueuses filmogènes procure à ces compositions une affinité telle vis à vis de la surface de faible énergie que la solidarisation de ce dépôt sur la surface traitée reste assurée pour des humidités relatives allant de 0 à 100%. Avantageusement, cette solidarisation reste assurée en présence d'eau, voire sous immersion dans l'eau, et ce y compris sur des surfaces de très faible énergie et/ou fortement hydrophobes, telles que par exemple les surfaces à base de polypropylène ou un polyéthylène.

De par la modification des propriétés de surface qu'ils induisent, et compte tenu de leur tenue à l'eau, les revêtements à base des compositions aqueuses filmogènes comprenant les copolymères à blocs réalisés selon l'invention peuvent être mis en oeuvre dans de nombreux domaines d'application.

Ainsi, selon un premier aspect, la présente invention a pour objet l'utilisation d'un copolymère à blocs à caractère amphiphile comprenant au moins un bloc de nature hydrophobe (H) et au moins bloc de nature hydrophile (h), le bloc de nature hydrophobe présentant des motifs hydrophiles dans une quantité comprise entre 0 % et 95 % en poids et de préférence entre 0,1 et 90% en poids par rapport au poids total des motifs du bloc hydrophobe, ledit copolymère étant éventuellement mis en solution dans un solvant tel qu'un solvant organique, de l'eau ou un mélange eau-alcool, à titre d'additif au sein d'une composition aqueuse filmogène, pour assurer ou promouvoir l'adhésion de ladite composition sur une surface de faible énergie.

La présente invention a également pour objet une composition aqueuse filmogène comprenant ledit copolymère à blocs à caractère amphiphile.

L'application de cette composition aqueuse filmogène selon l'invention sur la surface de fable énergie peut être effectuée en appliquant, sur la surface de faible énergie cette composition, ou bien en immergeant la surface à traiter dans la composition, puis en éliminant ensuite au moins partiellement, et de préférence pour l'essentiel, le solvant initialement contenu dans cette composition, par exemple par séchage.

Par élimination partielle, on entend une élimination d'au moins 70% en masse du solvant initialement présent, de préférence d'au moins 80% en masse, et encore plus avantageusement d'au moins 90% en masse.

Une élimination du solvant « pour l'essentiel » correspond quant à elle à une élimination d'au moins 95% en masse du solvant initialement présent, de préférence d'au moins 97% en masse, et encore plus avantageusement d'au moins 99% en masse.

La concentration en copolymère à blocs dans la composition aqueuse filmogène est comprise, dans le cas le plus général, entre 0,001 et 10% en masse par rapport à la masse totale de l'extrait sec de ladite composition.

De façon à obtenir un mouillage optimal du support et à éviter l'apparition d'hétérogénéités au sein du dépôt réalisé, on préfère utiliser une concentration de copolymère à bloc comprise entre 0,005 et 4% et de manière encore plus préférentielle comprise entre 0,01 et 1% en masse par rapport à la masse totale de l'extrait sec de ladite composition.

De telles teneurs confèrent à la composition aqueuse une viscosité adaptée à une application sur la surface de faible énergie. De plus, ces teneurs mènent à l'obtention d'un film continu (sans apparition de zones de démouillage) lorsqu'on les applique à l'aide d'un tire film sur des surfaces planes, ou, de façon plus générale, lorsqu'on immerge la surface à traiter dans ladite solution.

En outre, ces concentrations sont particulièrement bien adaptées pour réaliser, par un simple séchage, une élimination partielle ou totale d'un solvant aqueux.

Le séchage est effectué par exemple à une température comprise entre 15°C et 50°C (de préférence entre 19 et 25°C), et dans des conditions d'humidité comprises entre 10% et 70%, et de préférence entre 50% et 60%.

Dans le cas où le dépôt de la composition aqueuse filmogène sur la surface de faible énergie est réalisé à l'aide d'un tire-film, le film obtenu possède une épaisseur comprise entre 10 et 100 microns, et de façon avantageuse entre 40 et 60 microns. Ainsi, l'épaisseur du film déposé peut de façon encore plus avantageuse être de l'ordre de 50 microns.

Après le séchage on obtient un dépôt de la composition aqueuse filmogène d'épaisseur comprise entre 10 nm et 1 µm, avantageusement entre 40 et 600nm, et de préférence entre 50 et 500 nm.

Par « composition aqueuse filmogène », au sens de l'invention, on entend toute composition aqueuse sous la forme d'une dispersion ou d'une solution, généralement sous la forme d'une dispersion où la phase dispersée présente avantageusement une taille comprise entre 10Å à 100µm, et comprenant :
- à titre de phase continue ou de solvant, de l'eau, éventuellement en association avec d'autres composés hydrosolubles tels que des alcools, et notamment l'éthanol ; et
- des composés de type polymères ou précurseur de polymères, de résine acrylique ou de silicones, qui sont susceptibles de conduire à la formation d'un film polymère, d'un film acrylique ou d'un film silicone suite à l'application de la composition sur une surface et à l'évaporation au moins partielle de l'eau, et éventuellement des autres composés hydrosolubles tels que de l'éthanol.

Ainsi, de façon non limitative, les compositions aqueuses filmogènes de l'invention peuvent par exemple être des compositions comprenant une dispersion aqueuse ou hydro-alcoolique de polymères carbonés sous la forme d'un latex ou d'une formulation, de type adhésif, mastic ou peinture par exemple, comprenant un tel latex, ou de précurseurs de silicones et notamment une composition de mastic du type de celles décrites dans le documents EP 665 862, WO 98/13410 ou WO 99/65973.

Les copolymères à blocs mis en oeuvre dans la réalisation du dépôt de l'invention sont de préférence tels que leur bloc hydrophile (h) est constitué, au moins en partie, d'unités monomères choisies parmi :
- les acides mono- et di-carboxyliques insaturés éthyléniques tels que l'acide acrylique, l'acide méthacrylique, l'acide itaconique, l'acide maléique, ou l'acide fumarique,
- les mono-alkylesters des acides di-carboxyliques insaturés éthyléniques ci-dessus, de préférence avec des alcools en C₁-C₄, ainsi que leurs dérivés N-substitués, tels que par exemple l'acrylate ou le méthacrylate de 2-hydroxyéthyle,
- les amides des acides carboxyliques insaturés, comme l'acrylamide, le méthacrylamide, ou
- les monomères éthyléniques comprenant un groupe uréido tels que l'éthylène urée éthyle méthacrylamide, ou l'éthylène urée éthyle méthacrylate, ou
- les monomères éthyléniques comprenant au moins un groupement phosphate ou phosphonate acide, tel que l'acide vinyle phosphonique ou l'acide vinylidènephosphonique, ou
- les acrylates ou méthacrylates de polyéthylène glycol phosphatés, ou les acrylates ou méthacrylates de polypropylène glycol phosphatés, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
- les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote, la vinylamine, l'éthylène imine ; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le diméthyl amino éthyle (méth)acrylate, diméthyl amino propyl (méth)acrylate le ditertiobutyl aminoéthyl (méth)acrylate, le diméthyl amino méthyle (méth)acrylamide, le diméthyl amino propyl (méth)acrylamide ; l'éthylène imine, la vinylamine, la 2-vinylpyridine, la 4-vinylpyridine ; le chlorure de triméthylammonium éthyl (méth)acrylate, le méthyle sulfate de triméthylammonium éthyle acrylate, le chlorure de benzyle diméthylammonium éthyle (méth)acrylate, le chlorure de 4-benzoylbenzyl diméthyl ammonium éthyle acrylate, le chlorure de triméthyl ammonium éthyle (méth)acrylamido, le chlorure de triméthyl ammonium de vinylbenzyle ; le chlorure d'ammonium de diallyldiméthyle seuls ou en mélanges, ou leurs sels correspondants, ou
- l'alcoolpolyvinylique résultant de l'hydrolyse d'un polyacétate de vinyle par exemple, ou
- les amides cycliques de la vinylamine, tel que le n-vinylpyrrolidone, ou
- un monomère hydrophile provenant d'une modification chimique d'un bloc hydrophobe par exemple par hydrolyse d'un polyacrylate d'alkyle en polyacide acrylique.

De préférence, les unités monomères présentes au sein du bloc hydrophile (h) sont choisies parmi l'acide acrylique (AA), l'acide 2-acrylamido-2-méthyl-propanesulfonique (AMPS), le sulfonate de styrène (SS), des monomères comprenant des groupement uréido, des monomères comprenant des groupement phosphates ou phosphonates ou leurs mélanges.

De manière encore plus préférentielle on utilise des unités d'acide acrylique (AA) ou des monomères éthyléniques comprenant des groupements uréido.

Le bloc hydrophobe (H) des copolymères à blocs mis en oeuvre dans la réalisation du dépôt de l'invention est de préférence constitué, au moins en partie, d'unités monomères choisies parmi :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionate de vinyle, et
- les halogénures de vinyle, par exemple le chlorure de vinyle ; et
- les monomères diéniques, par exemple le butadiène ou l'isoprène.

De préférence, les unités monomères présentes au sein du bloc hydrophobe (H) du copolymère à blocs mis en oeuvre dans la réalisation du dépôt de l'invention sont des esters d'acide acryliques avec des alcools linéaires ou ramifiés en C1-C8, et en particulier en C1-C4, comme, par exemple, l'acrylate de méthyle, l'acrylate d'éthyle, l'acrylate de propyle, l'acrylate de butyle ou l'acrylate de 2-éthyl-hexyle, ou bien des dérivés styréniques tels que le styrène.

Ce bloc hydrophobe (H) peut contenir, en outre, entre 0 et 95% de monomères hydrophiles choisis dans la liste mentionnée ci-dessus de monomères hydrophiles (h).

Les copolymères à blocs selon l'invention peuvent avantageusement être des copolymères diblocs essentiellement constitués de l'association des deux blocs (h) et (H).

Les copolymères à blocs de l'invention peuvent aussi être des copolymères triblocs de formule (h)(H)(h') ou (H)(h)(H'), où (h') représente un bloc hydrophile similaire ou non à (h), et où (H') représente un groupe hydrophobe, similaire ou non à (H).

A titre de copolymères à blocs particulièrement avantageux dans le cadre de l'invention, on peut notamment citer les copolymères diblocs à base d'un bloc hydrophile poly(acide acrylique) et d'un bloc hydrophobe poly(acrylate de butyle), et en particulier les copolymères diblocs poly(acide acrylique)-poly(acrylate de butyle), dits PAA-PbuA.

Ces copolymères PAA-PbuA sont caractérisés par un rapport massique (acide acrylique)/(acrylate de butyle) qui peut être compris entre 10 : 90 et 90 : 10, et de préférence ce rapport est compris entre 10 : 90 et 50 : 50.

D'autres copolymères à blocs particulièrement avantageux dans le cadre de l'invention sont par exemple les copolymères à blocs dans lequel le bloc hydrophyle (h) est un poly(acide acrylique) et le bloc hydrophobe (H) est un copolymère statistique à base de styrène et d'acide acrylique contenant au moins 25%, de préférence 50%, et de manière encore plus préférentielle 75% en poids d'acide acrylique par rapport au poids total du mélange. Ces copolymères sont caractérisés par un rapport massique (bloc acide acrylique)/(bloc styrènique) qui peut être compris entre 95 :5 et 60 :40, et de préférence ce rapport est compris entre 85 :15 et 95 :5.

En général les copolymères à blocs amphiphiles utilisés dans l'invention présentent une masse moléculaire en nombre comprise entre 1 000 et 100 000. Le plus souvent, leur masse moléculaire en nombre est comprise entre 2 000 et 60 000.

Quelle que soit sa composition chimique exacte, le copolymère à blocs mis en oeuvre dans la réalisation du dépôt de l'invention peut avantageusement être préparé selon un procédé de polymérisation radicalaire contrôlée, réalisée en présence d'un agent de contrôle.

Par « polymérisation radicalaire contrôlée », on entend un procédé de polymérisation radicalaire spécifique, également désigné par le terme de « polymérisation vivante », dans lequel on met en oeuvre des agent de contrôle tels que les chaînes polymères en formation sont fonctionnalisées par des groupements terminaux susceptibles de pouvoir être réactivés sous forme de radicaux libres grâce à des réactions de terminaison et/ou de transfert réversibles.

A titre d'exemple de tels procédés de polymérisation, on peut notamment citer :
- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 97/01478
- le procédé de la demande WO 99/03894 qui met en oeuvre une polymérisation en présence de précurseurs nitroxydes,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiophosphoroesters de la demande PCT/FR 01/02374.
- le procédé de la demande WO 96/30421 qui utilise une polymérisation radicalaire par transfert d'atome (ATRP).
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co Itd Japan et Matyjaszewski et al., Macromolecules, 28, 2093 (1995),
- le procédé de polymérisation radicalaire contrôlée par les dérivés du tetraphényléthane, divulgué par D. Braun et al. Dans Macromol. Symp. 111,63 (1996), ou encore
- le procédé de polymérisation radicalaire contrôlée par des complexes organocobalt décrit par Wayland et al. Dans J.Am.Chem.Soc. 116,7973 (1994).

De façon générale, on préfère que les copolymères à blocs mis en oeuvre selon l'invention soient issus d'un procédé de polymérisation radicalaire contrôlée mettant en oeuvre, à titre d'agent de contrôle, un ou plusieurs composés choisis parmi les dithioesters, les thioethers-thiones, les dithiocarbamates, et les xanthates. De façon particulièrement avantageuse, les copolymères à blocs utilisés selon l'invention sont issus d'une polymérisation radicalaire contrôlée réalisée en présence d'agents de contrôle de type xanthates.

Selon un mode de mise en oeuvre préféré, le copolymère à blocs utilisé peut être obtenu selon un des procédés des demandes WO 98/58974, WO 00/75207 ou WO 01/42312 qui mettent en oeuvre une polymérisation radicalaire contrôlée par des agents de contrôle de type xanthates, ladite polymérisation pouvant être mise en oeuvre notamment en masse, en solvant, ou, de préférence en émulsion aqueuse, de façon à obtenir directement le copolymère sous forme d'une solution aqueuse ou hydro-alcoolique, ou aisément applicable à une teneur comprise entre 0,001 et 10% en masse. Une solution du copolymère à une teneur comprise entre 0,001 et 10% en poids obtenue directement par un procédé de polymérisation dans le même solvant organique est également utilisable.

Ainsi, on peut mettre en oeuvre un procédé comprenant les étapes suivantes :
- on réalise une polymérisation radicalaire contrôlée menant à l'obtention d'un polymère fonctionnalisé utile à titre d'agent de contrôle dans une réaction de polymérisation radicalaire contrôlée, ladite étape étant conduite en mettant en contact :
- des molécules monomères éthyléniquement insaturées,
- une source de radicaux libres, et
- au moins un agent de contrôle de formule (I) : 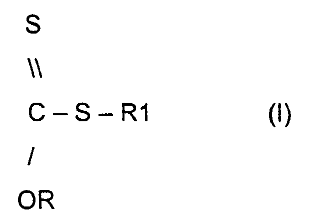 dans laquelle :
   - R représente :
   - H ou Cl;
   - un groupe alkyle, aryle, alcényle ou alcynyle ;
   - un cycle carboné, saturé ou non, éventuellement aromatique ;
   - un hétérocycle, saturé ou non, éventuellement aromatique ;
   - un groupe alkylthio,
   - un groupe alkoxycarbonyle, aryloxycarbonyle, carboxy, acyloxy, ou carbamoyle ;
   - un groupe cyano, dialkyl- ou diaryl-phosphonato, dialkyl- ou diaryl-phosphinato ;
   - une chaîne polymère,
   - un groupe (R2)O-, (R2)(R'2)N-, dans lesquels les radicaux R2 et R'2, identiques ou différents, représentent chacun :
   - un groupe alkyle, acyle, aryle, alcényle ou alcynyle ;
   - un cycle carboné, saturé ou non, éventuellement aromatique ; ou
   - un hétérocycle, saturé ou non, éventuellement aromatique ;
      et
   - R1 représente :
      - un groupe alkyle, acyle, aryle, alcényle ou alcynyle,
      - un cycle carboné, saturé ou non, éventuellement aromatique ;
      - un hétérocycle, saturé ou non, éventuellement aromatique ; ou
      - une chaîne polymère,

(b) on réalise, suite à l'étape (a), une étape de polymérisation radicalaire contrôlée, ou plusieurs étapes successives de polymérisations radicalaires contrôlées, ladite ou lesdites étape(s) consistant chacune à effectuer une polymérisation radicalaire contrôlée menant à l'obtention d'un copolymère à blocs fonctionnalisé utile à titre d'agent de contrôle dans une réaction de polymérisation radicalaire contrôlée , ladite ou lesdites étapes étant conduite(s) en mettant en contact :
- des molécules monomères éthyléniquement insaturées différentes de celles mis en oeuvre dans l'étape précédente,
- une source de radicaux libres, et
- le polymère fonctionnalisé issu de l'étape précédente.

Il est entendu que l'une des étapes de polymérisation (a) et (b) définies ci-dessus conduit à la formation du bloc hydrophile (h), et qu'une autre des étapes de polymérisation des étapes (a) et (b) conduit à la formation du bloc hydrophobe (H). Il est en particulier à noter que les monomères éthyléniquement insaturés mis en oeuvre dans les étapes (a) et (b) sont choisis parmi les monomères adaptés pour obtenir un copolymère à blocs amphiphile présentant les blocs (h) et (H) tels que définis précédemment.

Ainsi, dans le cadre de la formation du bloc hydrophobe (H), les monomères mis en oeuvre peuvent par exemple avantageusement être des esters d'acide acryliques avec des alcools linéaires ou ramifiés en C1-C4 , comme, par exemple, l'acrylate de méthyle, d'éthyle, de propyle ou de butyle, seuls ou en mélange avec d'autres monomères, ou bien du styrène en mélange avec au moins 25% en poids d'acide acrylique par rapport au poids total du bloc hydrophobe (H).

De façon générale, les étapes de polymérisation (a) et (b) sont mises en oeuvre dans un milieu solvant constitué d'eau et/ou d'un solvant organique tel que le tetrahydrofuranne ou un alcool aliphatique en C1-C8, linéaire, cyclique ou ramifié tel que le méthanol, l'éthanol, ou le cyclohexanol, ou encore un diol tel que l'éthylèneglycol.

Un solvant alcoolique est plus particulièrement recommandé dans le cadre de la mise en oeuvre de monomères hydrophiles du type de l'acide acrylique (AA), de l'acrylamide (AM), de l'acide 2-acrylamido-2-méthyl-propanesulfonique (AMPS), et du sulfonate de styrène (SS) et/ou dans le cadre de la mise en oeuvre de monomères hydrophobes tels que l'acrylate de n-butyle, l'acrylate d'isobutyle, l'acrylate de 2-éthylhexyle, ou l'acrylate de t-butyle.

De façon générale, les revêtements obtenus par l'application de la composition aqueuse filmogène de l'invention sur une surface de faible énergie sont tels qu'ils présentent une cohésion forte entre la surface et le revêtement réalisé.

En règle générale, l'affinité du revêtement pour la surface de faible énergie est telle que la force pelage à 90° de ce dépôt à une vitesse de pelage de 300mm/mn, mesurable par exemple à l'aide d'un dynamomètre de type Adamel-Lhomagry DY-30, est généralement supérieure ou égal à 0,5 N/mm, avantageusement supérieure à 1 N/mm, voire à 2 N/mm. Dans certains cas la force de pelage peut même être supérieure à 3 N/mm.

Cette forte affinité du revêtement pour le support se traduit naturellement par une très bonne stabilité du revêtement sur la surface.

En outre, l'adhésion du revêtement sur la surface n'est pas remise en cause en présence d'eau.

Ainsi, même lorsque le matériau est maintenu pendant une durée de 72 heures dans des conditions d'humidité relatives de 100%, la force pelage à 90° du dépôt reste généralement supérieure à 0,5 N/mm, et il n'est pas rare qu'elle reste supérieure à 1 N/mm, voire à 2 N/mm à une vitesse de pelage de 300 mm/mn.

Dans le cas des surfaces peintes, la stabilité du dépôt peut également être mise en évidence par un test de résistance à l'abrasion humide, selon la norme DYN 53778, consistant à frotter le revêtement obtenu avec une brosse de dureté et de poids normalisés sous un goutte à goutte d'eau additivée de tensioactif qui entretient le mouillage de la surface, et à mesurer le nombre de cycle de brossage nécessaire pour retirer le revêtement sur toute son épaisseur de façon à découvrir le support.

L'intérêt de la mise en oeuvre des copolymères de l'invention ressort clairement de la mise en oeuvre de tels tests, où on constate que la tenue d'un revêtement adhésif est largement accrue en présence de ces copolymères à blocs.

L'objet et les avantages de la présente invention apparaîtront de façon encore plus évidente au vu des différents exemples de mise en oeuvre exposés ci-après.

### Exemple 1 : Préparation d'un copolymère dibloc poly(acrylate de butyle)-poly(acide acrylique) selon l'invention, caractérisé par un rapport (acrylate de butyle)/poly(acide acrylique) de 50 : 50 en poids.

On introduit dans un réacteur muni d'un agitateur magnétique et d'une colonne à reflux, et comprenant 160 g d'acétone, le mélange suivant :
- 3,04 g de O-éthyl dithiocarbonate (désigné plus simplement par le terme « xanthate » ci-après)
- 21,24 g d'isopropanol, et
- 0,82 g d'azo-bis-isobutyronitrile (AIBN).

Le mélange est ensuite été agité et maintenu à reflux à 70°C.

On a ajouté 66g d'acide acrylique (AA) et 15g d'eau graduellement pendant 3 heures. Puis 0,41 g d'azo-bis-isobutyronitrile ont été ajoutés après une heure d'addition, puis encore 0,41 g d'azo-bis-isobutyronitrile ont été ajoutés après une seconde heure d'addition.

Une fois l'addition d'acide acrylique terminée, on laisse la polymérisation se poursuivre pendant une autre heure. Un quantité de 0,20g de mélange réactionnel est prélevée comme échantillon de PAA homopolymère.

La température est ensuite baissée à 65°C, par addition de 560g d'acétone.

Tout en maintenant la température à 65°C, on ajoute, graduellement, 140g d'acrylate de butyle (BA) pendant 3 heures. On ajoute 0,40g d'AIBN au commencement de l'addition de BA. On laisse la réaction se poursuivre pendant encore 3 heures. Le mélange réactionnel est refroidit et les solvants sont pratiquement complètement éliminés à l'aide d'un rotavapeur (évaporateur tournant). Le résidu obtenu est dispersé dans l'eau, et lyophilisé. Le polymère obtenu est analysé par résonance magnétique nucléaire du carbone 13 et par une mesure de sa teneur en acide.

La masse moléculaire en nombre du copolymère est de 15 000.

La température de transition vitreuse du bloc hydrophobe est de -54°C.

La tension de surface est de 55 mN/m à 10⁻⁴mole/l.

### Exemple 2 : Préparation d'un copolymère dibloc poly(acrylate de butyle)-poly(acide acrylique) selon l'invention caractérisé par un rapport (acrylate de butyle)/poly(acide acrylique) de 70 : 30 en poids.

On introduit sous atmosphère d'azote dans un réacteur muni d'un agitateur magnétique et d'une colonne à reflux, et comprenant 160 g d'acétone, le mélange suivant :
- 0,61 g de xanthate
- 4,25 g d'isopropanol,
- 0,16 g d'azo-bis-isobutyronitrile

Le mélange ainsi obtenu est mis sous et maintenu à reflux à 70°C. On ajoute 13,2g d'acide acrylique (AA) et 30,3g d'eau, graduellement, pendant 3 heures. Puis 0,08 g d'azo-bis-isobutyronitrile sont ajoutés après une heure d'addition puis encore 0,08 g d'azo-bis-isobutyronitrile sont ajoutés après une seconde heure d'addition. Une fois l'addition d'acide acrylique terminée, on laisse la polymérisation se poursuivre pendant une autre heure. Un quantité de 4,1g de mélange réactionnel est prélevée comme échantillon de PAA homopolymère.

La température est ensuite abaissée à 65°C par addition de 112g d'acétone. Tout en maintenant la température à 65°C, on ajoute, graduellement, 28g d'acrylate de butyle (BA) pendant 3 heures. On ajoute 0,08g d'AIBN au commencement de l'addition de BA. On arrête la purge d'azote et on laisse la réaction se poursuivre pendant encore 12 heures. Le mélange réactionnel est refroidit et les solvants sont pratiquement complètement éliminés à l'aide d'un rotavapeur (évaporateur tournant). Le résidu obtenu est dispersé dans l'eau, et lyophilisé. Le polymère obtenu est analysé par résonance magnétique nucléaire du carbone 13 et par la mesure de la teneur en acide.

La masse moléculaire en nombre est de 15 000.

La température de transition vitreuse du bloc hydrophobe est de :-54°C.

La tension de surface est de 52 mN/m à 10⁻⁴ mole/l.

### Exemple 3 : Préparation d'un copolymère dibloc poly(styrène-co-acide acrylique)-poly(acide acrylique) selon l'invention, caractérisé par un bloc hydrophobe de 2K et un bloc hydrophile de14K avec un taux variable d'acide acrylique dans le bloc hydrophobe (en particulier 73%).

- **Synthèse d'un copolymère statistique de styrène, d'acide méthacrylique et d'acrylate d'ethyle avec des rapports massiques : St/AMA/Aet = 25/2/73.**

La polymérisation est réalisée en émulsion, dans un réacteur double enveloppe muni d'une agitation tri-pâle en inox. En pied de cuve, on introduit, à température ambiante, 875 g d'eau, 13,9 g de sulfate de dodécyle, sel du sodium (Aldrich), 0,31 g de carbonate de sodium Na₂CO₃. Le mélange obtenu est agité pendant 30 minutes (190 tr/min) sous azote. L'agitation continue pour une durée supplémentaire de 55 minutes pendant laquelle la température est élevée à 75°C, puis on incorpore un mélange comprenant 2,16 g de styrène, et 9,01 g de alpha-(o-éthylxanthyl) propionate de méthyle (CH₃CHCO₂Me)SCSOEt, 0,17 g d'acide méthacrylique et 6,32 g d'acrylate d'ethyl. La température est ensuite élevée à 85°C et on ajoute 1,58 g de persulfate d'ammonium (NH₄)₂S₂O₈.
Après cinq minutes, on continue à ajouter 19,49 g de styrène, 1,56 g d'acide méthacrylique et 56,91 g d'acrylate d'ethyl pendant une heure. Apres l'addition complète, on obtient un polymère en émulsion (latex), qui est maintenu à 85°C pendant une heure.
On prélève 197,29 g du copolymère en émulsion précédemment obtenu. On lui additionne à 85°C 0,79 g de persulfate d'ammonium (NH₄)₂S₂O₈ et 3,5g d'eau. Apres cinq minutes, on commence l'addition d'un mélange composé de :
- 661,27 g d'acrylate d'éthyle (Aet),
   - 13,49 g d'acide méthacrylique (AMA),
Et simultanément un autre composé de :
- 420 g d'eau
- 0,75 g de Na₂CO₃

L'addition dure 1 heure. Le système est maintenu à cette température pendant trois heures supplémentaires.

### 2) Hydrolyse du copolymère dibloc :

L'hydrolyse aussi est effectuée dans un réacteur double enveloppe muni d'une agitation tri-pâle en inox. On y introduit :
- 54 g du copolymère précédent (l'extrait sec à 35,09 %),
- 250,8g d'eau (pour ajuster l'extrait sec à 4 %).

La température est portée à 85°C et cependant l'émulsion est agitée vigoureusement. Ensuite on y ajoute 182 g de soude 2N (correspondant à deux équivalents molaires de soude par rapport à l'acrylate d'éthyle) pendant deux heures. Après addition complète de la soude, la température est portée à 95°C et la réaction est maintenue dans ces conditions pendant 48 heures.

### Exemple 4 : Utilisation de copolymères diblocs poly(aclylate de butyle)-poly(acide acrylique) selon l'invention à titre d'additifs dans des compositions aqueuses filmogènes sous forme de latex

Les copolymère diblocs poly(acrylate de butyle)-poly(acide acrylique) obtenus dans les exemples 1 et 3 sont mis en oeuvre pour réaliser des compositions aqueuses filmogènes selon l'invention.

Le latex utilisé dans cet exemple est un latex acrylique industriel utilisé notamment en peinture décorative, commercialisé par Rhodia sous la référence DS 1003. Il s'agit d'une dispersion aqueuse de particules de copolymères styrène-acrylate dont le diamètre moyen est de 150 nm et
caractérisé par une teneur en polymères de 50% en masse **par rapport à la masse totale de la composition aqueuse.**

Dans les différents essais, on additionne dans ce latex un des copolymères diblocs poly(acrylate de butyle)-poly(acide acrylique) obtenus dans les exemples 1 et 3 dans des quantités variables : 0,07%, 0.1% ou 0,35% en poids sec par rapport au poids sec de latex.

On réalise ensuite des revêtements à partir des compositions ainsi obtenues, sur différents supports présentant des surfaces planes de faible énergie.

Dans chacun des essais, la surface du support est préalablement nettoyée avec un chiffon imbibé d'éthanol, de façon à réaliser son dégraissage. Après nettoyage, chacun des supports est placé pendant 4 heures dans une pièce conditionnée à 22°C (+/- 3°C) et dans des conditions d'humidité relative de 55% (+/- 5%).

Les caractéristiques des supports sont rassemblés dans le tableau I ci-dessus :

**Tableau I**

| Support | Formule | Angle formé par une goutte d'eau |
|---|---|---|
| Polyamide 6,6 (Nylon-PA) | (-NH-(CH₂)₆-NH-CO-(CH₂)₄-CO-) | 54° |
| Polycarbonates (PC) | (-O-CO-C-R-) | 77° |
| Polyéthylène téréphtalate (PETP) | (-Ar-CO-O-(CH₂)₂-) | 79° |
| Polymétacrylate de méthyle (PMMA) | (-CH₂-CMe(COOCH₃)-) | 72° |
| Polypropylène (PS) | (-CH₂-CH(Me)-) | 102° |
| Polystyrène (PS) | (-CH₂-CH(Ar)-) | 81° |
| Polychlorure de vinyle (PVC) | (-CH₂-CHCl-) | 83° |
| ABS | Acrylonitrile, butadiène, styrène | 74° |

On applique , à l'aide d'un tire-film, sur la surface du support ainsi conditionné, un film d'épaisseur uniforme égale à 50 microns, à partir de la composition testée, que l'on recouvre immédiatement avec une bande de toile de 25 mm de large, destinée à permettre d'effectuer ultérieurement un test de pelage à 90° du revêtement obtenu.

On laisse ensuite sécher le film ainsi formé pendant 12 heures, dans une pièce conditionnée à 22°C (+/- 3°C) et dans des conditions d'humidité relative de 55% (+/- 5%), de façon à réaliser un revêtement adhérant.

On procède ensuite à un vieillissement accéléré du support revêtu ainsi obtenu, en le plaçant pendant 12 heures dans une étuve à 40°C et à 30% d'humidité relative.

On place ensuite les échantillons pendant 12 heures, dans une pièce conditionnée à 22°C (+/- 3°C) et dans des conditions d'humidité relative de 55% (+/- 5%).

Suite à ces différentes étapes, on réalise un test de pelage à 90° du revêtement obtenu, consistant à tirer la bande de toile fixée sur le revêtement dans une direction perpendiculaire à la surface du support jusqu'à obtenir une désolidarisation du revêtement et de la surface, sur une longueur de 100 mm, en mesurant les forces mises en jeu à l'aide d'un dynamomètre Adamel-Lhomagry de type DY-30 avec un capteur de 100 N maximum. A l'issu de ce test, on détermine une force de traction à 90° moyenne (T₉₀) exprimée en N/mm, qui reflète l'affinité du revêtement réalisé vis-à-vis de la surface du support et la stabilité de ce revêtement.

Les résultats obtenus dans les différents tests réalisés sont rassemblés dans les tableaux II à VII ci-dessous :

**Tableau II**

| Nature du support | Nature du copolymère présent dans la composition filmogène | T₉₀ (en N/mm) |
|---|---|---|
| PA | Copolymère de l'exemple 1 Concentration de 0.1% en masse | 2.6 |
| | Copolymère de l'exemple 3 Concentration de 0.07% en masse | 4.5 |
| | Copolymère de l'exemple 3 Concentration de 0.35% en masse | 4.0 |
| | Pas de copolymère à titre d'additif (témoin) | 1.2 |

**Tableau III**

| Nature du support | Nature du copolymère présent dans la composition filmogène | T₉₀ (en N/mm) |
|---|---|---|
| PC | Copolymère de l'exemple 1 Concentration de 0.1% en masse | 2.1 |
| | Copolymère de l'exemple 3 Concentration de 0.07% en masse | 5.5 |
| | Copolymère de l'exemple 3 Concentration de 0.35% en masse | 3.0 |
| | Pas de copolymère à titre d'additif (témoin) | 1.2 |

**Tableau IV**

| Nature du support | Nature du copolymère présent dans la composition filmogène | T₉₀ (en N/mm) |
|---|---|---|
| PETP | Copolymère de l'exemple 1 Concentration de 0.1% en masse | 1.4 |
| | Copolymère de l'exemple 3 Concentration de 0.07% en masse | 2.0 |
| | Copolymère de l'exemple 3 Concentration de 0.35% en masse | 1.7 |
| | Pas de copolymère à titre d'additif (témoin) | 0.6 |

**Tableau V**

| Nature du support | Nature du copolymère présent dans la composition filmogène | T₉₀ (en N/mm) |
|---|---|---|
| PMMA | Copolymère de l'exemple 1 Concentration de 0.1% en masse | 2.4 |
| | Copolymère de l'exemple 3 Concentration de 0.07% en masse | 2.2 |
| | Copolymère de l'exemple 3 Concentration de 0.35% en masse | 2.0 |
| | Pas de copolymère à titre d'additif (témoin) | 1.3 |

**Tableau VI**

| Nature du support | Nature du copolymère présent dans la composition filmogène | T₉₀ (en N/mm) |
|---|---|---|
| PS | Copolymère de l'exemple 1 Concentration de 0.1% en masse | 2.2 |
| | Copolymère de l'exemple 3 Concentration de 0.07% en masse | 2.5 |
| | Copolymère de l'exemple 3 Concentration de 0.35% en masse | 4.2 |
| | Pas de copolymère à titre d'additif (témoin) | 1.3 |

**Tableau VII**

| Nature du support | Nature du copolymère présent dans la composition filmogène | T₉₀ (en N/mm) |
|---|---|---|
| PVC | Copolymère de l'exemple 1 Concentration de 0.1 % en masse | 2.5 |
| | Copolymère de l'exemple 3 Concentration de 0.07% en masse | 6.0 |
| | Copolymère de l'exemple 3 Concentration de 0.35% en masse | 4.5 |
| | Pas de copolymère à titre d'additif (témoin) | 1.6 |

### Exemple 5 : Utilisation des copolymères diblocs poly(acrylate de butyle)-poly(acide acrylique) et poly(styrène-co-acide acrylique)-poly(acide acrylique) de l'invention pour améliorer la résistance à l'abrasion humide d'un revêtement de peinture déposée sur un support de polymère thermoplastique : formulation simplifiée.

Les copolymères dibloc des exemples 1 et 3 sont mis en oeuvre pour additiver un latex entrant dans une formulation de peinture dont un dépôt est réalisé sur un support plan en PVC de couleur noire, référencé Papier Lénéta.

La surface du support mis en oeuvre est préalablement nettoyée avec un chiffon imbibé d'éthanol, de façon à réaliser un dégraissage. Après nettoyage, le support est placé pendant 4 heures dans une pièce conditionnée à 22°C (+/- 3°C) et dans des conditions d'humidité relative de 55% (+/- 5%).

On additive ensuite le latex DS1003 tel que défini dans l'exemple 4 avec des quantités variables (x = 0.1 % et 0.5% en masse par rapport à l'extrait sec du latex) additionnée d'hydroxyde de sodium jusqu'à obtention d'un pH de 8.5

On dépose ensuite sur la surface nettoyée, à l'aide d'un tire film, un film de 1,5 mm d'épaisseur d'une formulation de peinture comprenant :
- 100 parties en poids de carbonate de calcium
- 10 parties en poids de latex DS 1003 additivé de x % du copolymère dibloc
- de l'eau, ajoutée de façon à obtenir une formulation possédant un extrait sec de 72% en masse.

On laisse ensuite sécher le film obtenu pendant 21 jours, dans une pièce conditionnée à 22°C (+/- 3°C) et dans des conditions d'humidité relative de 55% (+/- 5%).

Suite à ces différentes étapes, le support revêtu obtenu est soumis à un test de résistance à l'abrasion humide (RAH) tel que défini dans la norme DYN 53778, qui évalue la résistance de la peinture au lavage et/ou au lessivage.

Il consiste en l'abrasion cyclique d'un feuil de peinture par une brosse normalisée en masse et dureté sous un goutte-à-goutte d'une solution de savon. La RAH s'exprime comme le nombre de cycles d'abrasion supportable par le feuil avant de voir le support apparaître : 100% de la peinture a été retirée.

Les résultats du test de RAH sont rassemblés dans le tableau VIII ci-dessous :

**Tableau VIII**

| Nature du copolymère présent dans la composition filmogène | Taux (%) | RAH |
|---|---|---|
| Pas de copolymère | 0 | 903 |
| Copolymère de l'exemple 1 | 0.1% | 963 |
| | 0.5% | 1066 |
| Copolymère de l'exemple 2 | 0.1% | 930 |
| | 0.5% | 917 |

L'augmentation du nombre de cycles d'abrasion humide nécessaire lors de l'ajout de copolymère dibloc dans une certaine gamme de concentration met bien en évidence l'amélioration de la cohésion entre le support et le revêtement induit par la mise en oeuvre du copolymère séquencé de l'invention en tant qu'additif au latex entrant dans la composition d'une formule simplifiée de peinture.

### Exemple 6 : Utilisation des copolymères diblocs poly(acrylate de butyle)-poly(acide acrylique) et poly(styrène-co-acide acrylique)-poly(acide acrylique) de l'invention pour augmenter la résistance à l'abrasion humide d'une couche de peinture sur un support de type polymère thermoplastique : formulation complète.

Les copolymères dibloc des exemples 1 et 3 sont mis en oeuvre pour additiver un latex entrant dans la formulation d'une peinture dont un dépôt est réalisé sur un support plan en PVC de couleur noire, référencé Papier Lénéta.

La surface du support mis en oeuvre est préalablement nettoyée avec un chiffon imbibé d'éthanol, de façon à réaliser un dégraissage. Après nettoyage, le support est placé pendant 4 heures dans une pièce conditionnée à 22°C (+/-3°C) et dans des conditions d'humidité relative de 55% (+/- 5%).

On additive ensuite le latex DS1003 tel que défini dans l'exemple 4 avec des quantités variables (x = 0.1 % et 0.5% en masse par rapport à l'extrait sec du latex) additionnée d'hydroxyde de sodium jusqu'à obtention d'un pH de 8.5

On dépose ensuite sur la surface nettoyée, à l'aide d'un tire film, un film de 1,5 mm d'épaisseur d'une formulation de peinture comprenant :
- 100 parties en poids d'une base pigmentaire décrite ci-dessous
- 16 parties en poids de latex DS 1003, additivé de x % du copolymère dibloc
- de l'eau, ajoutée de façon à obtenir une formulation possédant un extrait sec de 63.4% en masse.

La base pigmentaire utilisée est indiquée dans le tableau IX ci-dessous :

**Tableau IX**

| Composé | | Densité | Extrait sec (%) | Masse humide (g) |
|---|---|---|---|---|
| eau | | | | 9 |
| Thylose MH 6000 XP(2%/H20) | (épaississant) | | 2 | 18,5 |
| Rhodoline DP 1130 | (dispersant) | | 40 | 0,35 |
| Proxel BD ou GXL | (Biocide) | | | 0,085 |
| Clérol TPE 714 | (Anti- mousse) | | 100 | 0,1 |
| TiO2 RL 568 | (Titane) | 4 | 100 | 5 |
| Durcal 5 | (talc) | 2.7 | 100 | 30,45 |
| Omyalite 90 | (carbonate) | 2.7 | 100 | 20,02 |
| Clérol TPE 714 | (Anti-mousse) | | 100 | 0.1 |
| | | | | |
| Pate pigmentaire | | | | 83,785 |

On laisse ensuite sécher le film obtenu pendant 21 jours, dans une pièce conditionnée à 22°C (+/- 3°C) et dans des conditions d'humidité relative de 55% (+/- 5°C).

Suite à ces différentes étapes, le support revêtu obtenu est soumis à un test de résistance à l'abrasion humide (RAH) tel que défini dans la norme DYN 53778, qui évalue la résistance de la peinture au lavage et/ou au lessivage.

Il consiste en l'abrasion cyclique d'un feuil de peinture par une brosse normalisée en masse et dureté sous un goutte-à-goutte d'une solution de savon. La RAH s'exprime comme le nombre de cycles d'abrasion supportable par le feuil avant de voir le support apparaître : 100% de la peinture a été retirée.

Les résultats du test de RAH sont rassemblés dans le tableau X ci-dessous :

**Tableau X**

| Nature du copolymère présent dans la composition filmogène | Taux (%) | RAH |
|---|---|---|
| Pas de copolymère | 0 | 326 |
| Copolymère de l'exemple 1 | 0.1% | 339 |
| | 0.5% | 406 |
| Copolymère de l'exemple 2 | 0.1% | 406 |
| | 0.5% | 369 |

On note que dans le cas d'une peinture en formule complète, la résistance à l'abrasion humide est plus faible que dans le cas d'une formulation simplifiée (nombre de cycles nécessaire à une abrasion totale plus faible). Toutefois, il y a augmentation du nombre de cycles lors de l'ajout de copolymère dibloc dans une certaine gamme de concentration, ce qui met bien en évidence l'amélioration de la cohésion entre le support et le revêtement induit par la mise en oeuvre du copolymère séquencé de l'invention en tant qu'additif au latex entrant dans la composition d'une formule complète de peinture.

### Exemple 7 : Utilisation de copolymères diblocs poly(acrylate de butyle)-poly(acide acrylique) et poly(styrène-co-acide acrylique)-poly(acide acrylique) selon l'invention pour améliorer l'efficacité du dépôt d'une peinture sur un support de type polymère thermoplastique

Les copolymère diblocs obtenus dans les exemples 1 et 3 sont mis en oeuvre pour additiver un latex entrant dans la formulation d'une peinture dont une couche est déposée sur un support plan en PVC. A titre comparatif, le dépôt de la peinture formulée avec un latex non additivé est également effectué sur du PVC.

Le latex utilisé dans cet exemple est un latex acrylique industriel utilisé notamment en peinture décorative, commercialisé par Rhodia sous la référence DS 1003. Ces caractéristiques sont détaillées dans l'exemple 4.

Dans chacun des essais réalisés, la surface du support mis en oeuvre est préalablement nettoyée avec un chiffon imbibé d'éthanol, de façon à réaliser un dégraissage. Après nettoyage, chacun des supports est placé pendant 4 heures dans une pièce conditionnée à 22°C (+/- 3°C) et dans des conditions d'humidité relative de 55% (+/- 5°C).

On additive ensuite le latex DS1003 tel que défini dans l'exemple 4 avec des quantités variables (x = 0.1 % et 0.5% en masse par rapport à l'extrait sec du latex) additionnée d'hydroxyde de sodium jusqu'à obtention d'un pH de 8.5

On dépose ensuite sur la surface nettoyée, à l'aide d'un tire film, un film de 1,5 mm d'épaisseur d'une formulation de peinture comprenant :
- 100 parties en poids d'une base pigmentaire décrite dans l'exemple 6.
- 16 parties en poids de latex DS additivé de x % du copolymère dibloc
- de l'eau, ajoutée de façon à obtenir une formulation possédant un extrait sec de 63.4% en masse,
que l'on recouvre immédiatement par une bande de toile de 25 mm de large, destinée à permettre d'effectuer ultérieurement un test de pelage à 90° du revêtement obtenu.

On laisse ensuite sécher ce film pendant 12 heures, dans une pièce conditionnée à 22°C (+/- 3°C) et dans des conditions d'humidité relative de 55% (+/- 5%).

On procède ensuite à un vieillissement accéléré du support revêtu ainsi obtenu, en le plaçant pendant 12 heures dans une étuve à 40°C et à 30% d'humidité relative.

On place ensuite les échantillons pendant 12 heures, dans une pièce conditionnée à 22°C (+/- 3°C) et dans des conditions d'humidité relative de 55% (+/- 5%).

On réalise alors un test de pelage à 90° du revêtement obtenu, consistant à tirer la bande de toile fixée sur le revêtement dans une direction perpendiculaire à la surface du support à une vitesse de 300mm/mn jusqu'à obtenir une désolidarisation du revêtement et de la surface, sur une longueur de 100 mm, en mesurant les forces mises en jeu à l'aide d'un dynamomètre.

Adamel-Lhomagry de type DY-30 avec un capteur de 100 N maximum. A l'issu de ce test, on détermine une force de traction à 90° moyenne (T₉₀) exprimée en N/mm, qui reflète l'affinité du revêtement réalisé vis-à-vis de la surface du support et la stabilité de ce revêtement.

Les résultats obtenus dans les différents tests réalisés sont rassemblés dans le tableau XI suivant :

**Tableau XI**

| Nature de copolymère séquencé et taux d'additivation au latex | T₉₀ (enN/mm) |
|---|---|
| Pas de copolymère (témoin) | 0,5 |
| Copolymère de l'exemple 1 à 66ppm | 0.6 |
| Copolymère de l'exemple 1 à 330ppm | 0.55 |
| Copolymère de l'exemple 3 à 66ppm | 0.7 |
| Copolymère de l'exemple 3 à 330ppm | 0.65 |

Ce test de pelage permet de montrer que l'additivation au latex de copolymères séquencés amphiphiles permet d'améliorer l'adhésion d'une couche de peinture formulée avec ce latex sur un support plastique de type PVC.

### Exemple 8 : Utilisation de copolymères diblocs poly(acrylate de butyle)-poly(acide acrylique) et poly(styrène-co-acide acrylique)-poly(acide acrylique) selon l'invention pour améliorer l'efficacité du dépôt d'une peinture sur un support de type polymère thermoplastique en présence d'eau

Les copolymère diblocs obtenus dans les exemples 1 et 3 sont mis en oeuvre pour additiver un latex entrant dans la formulation d'une peinture dont une couche est déposée sur un support plan en PVC. A titre comparatif, le dépôt de la peinture formulée avec un latex non additivé est également effectué sur du PVC.

Le latex utilisé dans cet exemple est un latex acrylique industriel utilisé notamment en peinture décorative, commercialisé par Rhodia sous la référence DS 1003. Ces caractéristiques sont détaillées dans l'exemple 4.

Dans chacun des essais réalisés, la surface du support mis en oeuvre est préalablement nettoyée avec un chiffon imbibé d'éthanol, de façon à réaliser un dégraissage. Après nettoyage, chacun des supports est placé pendant 4 heures dans une pièce conditionnée à 22°C (+/- 3°C) et dans des conditions d'humidité relative de 55% (+/- 5%).

On additive ensuite le latex DS1003 tel que défini dans l'exemple 4 avec des quantités variables (x = 0.1 % et 0.5% en masse par rapport à l'extrait sec du latex) additionnée d'hydroxyde de sodium jusqu'à obtention d'un pH de 8.5

On dépose ensuite sur la surface nettoyée, à l'aide d'un tire film, un film de 1,5 mm d'épaisseur d'une formulation de peinture comprenant :
- 100 parties en poids d'une base pigmentaire décrite dans l'exemple 6.
- 16 parties en poids de latex DS 1003, additivé de x % du copolymère dibloc
- de l'eau, ajoutée de façon à obtenir une formulation possédant un extrait sec de 63.4% en masse, que l'on recouvre immédiatement par une bande de toile de 25 mm de large, destinée à permettre d'effectuer ultérieurement un test de pelage à 90° du revêtement obtenu.

On laisse ensuite sécher ce film pendant 12 heures, dans une pièce conditionnée à 22°C (+/- 3°C) et dans des conditions d'humidité relative de 55% (+/- 5%).

On procède ensuite à un vieillissement accéléré du support revêtu ainsi obtenu, en le plaçant pendant 12 heures dans une étuve à 40°C et à 30% d'humidité relative.

On place ensuite les échantillons pendant 12 heures, dans une pièce conditionnée à 22°C (+/- 3°C) et dans des conditions d'humidité relative de 55% (+/- 5%).

Les support revêtus sont immergés pendant 2 heures consécutives dans de l'eau déminéralisée, puis séchés pendant 24 heures, dans une pièce conditionnée à 22°C (+/- 3°C) et dans des conditions d'humidité relative de 55% (+/- 5%).

A l'issu de ce cycle trempage/séchage, on réalise alors un test de pelage à 90° du revêtement obtenu, consistant à tirer la bande de toile fixée sur le revêtement dans une direction perpendiculaire à la surface du support à une vitesse de 300mm/mn jusqu'à obtenir une désolidarisation du revêtement et de la surface, sur une longueur de 100 mm, en mesurant les forces mises en jeu à l'aide d'un dynamomètre Adamel-Lhomagry de type DY-30 avec un capteur de 100 N maximum. A l'issu de ce test, on détermine une force de traction à 90° moyenne (T₉₀) exprimée en N/mm, qui reflète l'affinité du revêtement réalisé vis-à-vis de la surface du support et la stabilité de ce revêtement.

Les résultats obtenus dans les différents tests réalisés sont rassemblés dans le tableau XII suivant :

**Tableau XII**

| Nature de copolymère séquencé et taux d'additivation au latex | T₉₀ (en N/mm) |
|---|---|
| Pas de copolymère (témoin) | 0,6 |
| Copolymère de l'exemple 1 à 66ppm | 0.75 |
| Copolymère de l'exemple 1 à 330ppm | 0.65 |
| Copolymère de l'exemple 3 à 66ppm | 0.8 |
| Copolymère de l'exemple 3 à 330ppm | 0.65 |

Ce test de recouvrance permet de montrer que l'additivation au latex de copolymères séquencés amphiphiles permet d'améliorer l'adhésion d'une couche de peinture formulée avec ce latex sur un support plastique de type PVC, et ce même après une immersion prolongée dans de l'eau.

## Revendications

1. Utilisation d'un copolymère à blocs à caractère amphiphile comprenant au moins un bloc de nature hydrophobe et au moins bloc de nature hydrophile, le bloc de nature hydrophobe présentant des motifs hydrophiles dans une quantité comprise entre 0 % et 95 % en poids par rapport au poids total des motifs du bloc hydrophobe, ledit copolymère étant éventuellement mis en solution dans un solvant tel qu'un solvant organique, de l'eau ou un mélange eau-alcool, à titre d'additif au sein d'une composition aqueuse filmogène, pour assurer ou promouvoir l'adhésion de ladite composition sur une surface de faible énergie.

2. Utilisation selon la revendication 1, **caractérisée en ce que** la surface de basse énergie est une surface présentant un angle de contact d'une goutte d'eau déposée sur la surface correspondant à l'angle existant entre la surface et la tangente à la goutte à l'interface surface/eau/air est supérieur à 45°.

3. Utilisation selon l'une quelconque des revendications précédentes, **caractérisée en ce que** la surface de basse énergie est une surface à base d'un polyamide, d'un polycarbonate, d'un polyéthylène-téréphtalate, d'un polyméthyl-méthacrylate, d'un polypropylène, d'un polyéthylène, d'un polystyrène, d'un polyester, d'un acrylonitrile butadiène styrène (ABS), ou d'un polychlorure de vinyle.

4. Utilisation selon l'une des revendications précédentes, **caractérisée en ce que** le copolymère à bloc mis en oeuvre est tel que son bloc hydrophile (h) est constitué, au moins en partie, d'unités monomères choisies parmi :
- les acides mono- et di-carboxyliques insaturés éthyléniques tels que l'acide acrylique, l'acide méthacrylique, l'acide itaconique, l'acide maléique, ou l'acide fumarique,
- les mono-alkylesters des acides di-carboxyliques insaturés éthyléniques ci-dessus, de préférence avec des alcools en C₁-C₄, ainsi que leurs dérivés N-substitués, tels que par exemple l'acrylate ou le méthacrylate de 2-hydroxyéthyle,
- les amides des acides carboxyliques insaturés, comme l'acrylamide, le méthacrylamide, ou
- les monomères éthyléniques comprenant un groupe uréido tels que l'éthylène urée ethyl méthacrylamide, ou l'éthylène urée ethyl méthacrylate, ou
- les monomères éthyléniques comprenant au moins un groupement phosphate ou phosphonate acide, tel que l'acide vinyl phosphonique ou l'acide vinylidènephosphonique, ou
- les acrylates ou méthacrylates de polyéthylène glycol phosphatés, ou les acrylates ou méthacrylates de polypropylène glycol phosphatés, ou
- les monomères éthyléniques comportant un groupe acide sulfonique ou un de ses sels alcalins ou d'ammonium, comme par exemple l'acide vinylsulfonique, l'acide vinylbenzène sulfonique, l'acide alpha-acrylamido-méthylpropanesulfonique, ou le 2-sulfoéthylène-méthacrylate, ou
- les monomères cationiques choisis parmi les (méth)acrylates d'aminoalkyle, les (méth)acrylamides d'aminoalkyle ; les monomères comprenant au moins une fonction amine secondaire, tertiaire ou quaternaire, ou un groupe hétérocyclique contenant un atome d'azote, la vinylamine, l'éthylène imine ; les sels d'ammonium de diallyldialkyl ; ces monomères étant pris seuls ou en mélanges, ainsi que sous forme de sels, les sels étant de préférence choisis de telle sorte que le contre-ion soit un halogénure comme par exemple un chlorure, ou un sulfate, un hydrosulfate, un alkylsulfate (par exemple comprenant 1 à 6 atomes de carbone), un phosphate, un citrate, un formate, un acétate, tels que le méthyle amino éthyle (méth)acrylate, diméthyle amino propyle (méth)acrylate le ditertiobutyle aminoéthyle (méth)acrylate, le diméthyle amino méthyle (méth)acrylamide, le diméthyle amino propyle (méth)acrylamide ; l'éthylène imine, la vinylamine, la 2-vinylpyridine, la 4-vinylpyridine ; le chlorure de triméthylammonium éthyle (méth)acrylate, le méthyle sulfate de triméthylammonium éthyle acrylate, le chlorure de benzyle diméthylammonium éthyle (méth)acrylate, le chlorure de 4-benzoylbenzyl diméthyle ammonium éthyle acrylate, le chlorure de triméthyle ammonium éthyle (méth)acrylamido, le chlorure de triméthyle ammonium de vinylbenzyle ; le chlorure d'ammonium de diallyldiméthyle seuls ou en mélanges, ou leurs sels correspondants, ou
- l'alcoolpolyvinylique résultant de l'hydrolyse d'un polyacétate de vinyle par exemple, ou
- les amides cycliques de la vinylamine, tel que le n-vinylpyrrolidone, ou
- un monomère hydrophile provenant d'une modification chimique d'un bloc hydrophobe par exemple par hydrolyse d'un polyacrylate d'alkyle en acide acrylique.

5. Utilisation selon la revendication 4, **caractérisée en ce que** les unités monomères présentes au sein du bloc hydrophile (h) du copolymère à blocs mis en oeuvre sont des unités l'acide acrylique (AA), l'acide 2-acrylamido-2-méthyl-propanesulfonique (AMPS), le sulfonate de styrène (SS), des monomères comprenant des groupement uréido, des monomères comprenant des groupement phosphates ou phosphonates ou leurs mélanges.

6. Utilisation selon l'une des revendications précédentes, **caractérisée en ce que** le copolymère à blocs mis en oeuvre est tel que son bloc hydrophobe (H) est constitué, au moins en partie, d'unités monomères choisies parmi :
- les monomères dérivés styréniques tels que le styrène, l'alphaméthylstyrène, le paraméthylstyrène ou le paratertiobutylstyrène, ou
- les esters de l'acide acrylique ou de l'acide méthacrylique avec des alcools en C1-C12, de préférence en C1-C8, éventuellement fluorés, tels que, par exemple, l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques contenant de 3 à 12 atomes de carbone, et notamment l'acrylonitrile ou le méthacrylonitrile,
- les esters vinyliques d'acides carboxyliques, comme l'acétate de vinyle, le versatate de vinyle, ou le propionate de vinyle, et
- les halogénures de vinyle, par exemple le chlorure de vinyle ;
- les monomères diéniques, par exemple le butadiène ou l'isoprène.

7. Utilisation selon la revendication 6, **caractérisée en ce que** les unités monomères présentes au sein du bloc hydrophobe (H) du copolymère à blocs mis en oeuvre sont des esters d'acide acryliques avec des alcools linéaires ou ramifiés en C₁-C₈, et en particulier en C₁-C₄, comme, par exemple, l'acrylate de méthyle, l'acrylate d'éthyle, l'acrylate de propyle, l'acrylate de butyle ou l'acrylate de 2-éthylhexyle, ou bien des dérivés styréniques tels que le styrène.

8. Utilisation selon l'une des revendications précédentes, **caractérisée en ce que** le copolymère à blocs mis en oeuvre est un copolymère dibloc poly(acide acrylique)-poly(acrylate de butyle).

9. Utilisation selon la revendication 8, **caractérisée en ce que** le rapport massique (acide acrylique)/(acrylate de butyle est compris entre 10 :90 et 90 :10.

10. Utilisation selon l'une quelconque des revendications 1 à 7, **caractérisée en ce que** le copolymère à blocs mis en oeuvre est un copolymère dibloc dans lequel le bloc hydrophyle (h) est un poly'(acide acrylique) et le bloc hydrophobe (H) est un copolymère statistique à base de styrène et d'acide acrylique contenant au moins 25%, de préférence 50%, et de manière encore plus préférentielle 75% en poids d'acide acrylique par rapport au poids total du mélange.

11. Utilisation selon la revendication 10, **caractérisée en ce que** le rapport massique (bloc acide acrylique)/(bloc styrènique) est compris entre 95 :5 et 60 :40.

12. Utilisation selon l'une des revendications précédentes, **caractérisée en ce que** le copolymère à blocs mis en oeuvre est obtenu à l'issu d'un procédé de polymérisation radicalaire contrôlée, utilisant de préférence, à titre d'agent de contrôle, un ou plusieurs composés choisis parmi les dithioesters, les thioethersthicnes, les dithiocarbamates, et les xanthates, ladite polymérisation étant mise en oeuvre notamment en masse, en solvant, ou, en émulsion aqueuse, de façon à obtenir directement le copolymère sous forme d'une solution aqueuse ou hydro-alcoolique.

13. Utilisation selon la revendication 12, **caractérisée en ce que** la concentration de copolymère à blocs dans la composition aqueuse filmogène est comprise entre 0,001 et 10 % en masse par rapport à la masse totale de l'extrait sec de la composition aqueuse filmogène.

14. Utilisation selon la revendication 13, **caractérisée en ce que** la concentration de copolymère à blocs dans la composition aqueuse filmogène est comprise entre 0.005 et 4% en masse par rapport à la masse totale de l'extrait sec de la composition aqueuse fimogène.

15. Utilisation selon la revendication 14, **caractérisée en ce que** la concentration de copolymères à blocs dans la composition aqueuse filmogène est comprise entre 0,01 et 1% en masse par rapport à la masse totale de l'extrait sec de la composition aqueuse filmogène.

16. Composition aqueuse filmogène comprenant un copolymère à bloc tel que défini dans l'une quelconque des revendications 4 à 15 ladite composition étant une composition d'adhésif, une composition de peinture, ou une composition de mastic éventuellement siliconé.

## Claims

1. Use of a block copolymer of an amphiphilic nature comprising at least one block of a hydrophobic nature and at least one block of a hydrophilic nature, the block of a hydrophobic nature having hydrophilic groups in a quantity of between 0% and 95% by weight in relation to the total weight of the groups in the hydrophobic block, the said copolymer being possibly dissolved in a solvent such as an organic solvent, water or a water-alcohol mixture, as an additive to an aqueous film-forming composition to ensure or promote adhesion between the said composition and a low energy surface.

2. Use according to claim 1, **characterised in that** the low energy surface is a surface having an angle of contact with a water drop deposited on the surface corresponding to the angle between the surface and the tangent to the drop at the surface/water/air interface of more than 45°.

3. Use according to either of the preceding claims, **characterised in that** the low energy surface is a surface based on a polyamide, a polycarbonate, a polyethylene-terephthalate, a polymethyl-methacrylate, a polypropylene, a polyethylene, a polystyrene, a polyester, an acrylonitrile butadiene styrene (ABS) or a polyvinyl chloride.

4. Use according to any one of the preceding claims, **characterised in that** the block copolymer used is such that its hydrophilic block (h) comprises, at least in part, monomer units selected from:
- unsaturated ethylenic mono- and dicarboxylic acids such as acrylic acid, methacrylic acid, itaconic acid, maleic acid or fumaric acid,
- mono-alkyl esters of the above unsaturated ethylenic dicarboxylic acids, preferably with C₁-C₄ alcohols, and their N-substituted derivatives, such as for example 2-hydroxyethyl acrylate or methacrylate,
- amides of unsaturated carboxylic acids, such as acrylamide, methacrylamide, or
- ethylenic monomers comprising a ureide group such as ethylene urea ethyl methacrylamide or ethylene urea ethyl methacrylate, or
- ethylenic monomers comprising at least one acid phosphate or phosphonate group, such as vinyl phosphonic acid or vinylidine phosphonic acid, or
- phosphated polyethylene glycol acrylates or methacrylates, or phosphated polypropylene glycol acrylates or methacrylates, or
- ethylenic monomers comprising a sulphonic acid group or one of its alkaline or ammonium salts, such as for example vinyl sulphonic acid, vinyl benzene sulphonic acid, alpha-acrylamido-methyl propane sulphonic acid, or 2-sulphoethylene-methacrylate, or
- cationic monomers selected from among amino alkyl (meth)acrylates, aminoalkyl (meth)acrylamides; monomers comprising at least one secondary, tertiary or quaternary amine group, or a heterocyclic group containing a nitrogen atom, vinyl amine, ethylene imine; diallyl dialkyl ammonium salts; these monomers being taken alone or as mixtures, and in the form of salts, the salts being preferably selected so that the coreesponding ion is a halide such as for example a chloride, or a sulphate, a hydrogen sulphate, an alkyl sulphate (for example comprising 1 to 6 carbon atoms), a phosphate, a citrate, a formate, an acetate, such as methyl aminoethyl (meth)acrylate, dimethyl aminopropyl (meth)acrylate, ditertiarybutyl aminoethyl (meth)acrylate, dimethyl aminomethyl (meth)acrylamide, dimethyl amino propyl (meth)acrylamide; ethylene imine, vinyl amine, 2-vinyl pyridine, 4-vinyl pyridine; trimethyl ammonium ethyl (meth)acrylate chloride, trimethyl ammonium ethyl acrylate methyl sulphate, benzyl dimethyl ammonium ethyl (meth)acrylate chloride, 4-benzoylbenzyl dimethyl ammonium ethyl acrylate chloride, trimethyl ammonium ethyl (meth)acrylamide chloride, trimethyl ammonium vinyl benzene chloride; diallylmethyl ammonium chloride alone or in mixtures, or their corresponding salts, or
- poly vinyl alcohol resulting from the hydrolysis of for example a poly vinyl acetate, or
- cyclic amides of vinyl amine, such as n-vinyl pyrrolidone, or
- a hydrophilic monomer originating from a chemical modification of a hydrophobic block for example by the hydrolysis of an alkyl polyacrylate in acrylic acid.

5. Use according to claim 4, **characterised in that** the monomer units present in the hydrophilic block (h) of the block copolymer used are acrylic acid (AA), 2-acrylamido-2-methyl-propane sulphonic acid (AMPS) and styrene sulphonate (SS) units, monomers comprising ureide groups, monomers comprising phosphate or phosphonate groups or their mixtures.

6. Use according to any one of the preceding claims, **characterised in that** the block copolymer used is such that its hydrophobic block (H) comprises, at least in part, monomer units selected from:
- styrene derivative monomers such as styrene, alphamethyl styrene, paramethyl styrene or paratertiarybutyl styrene, or
- esters of acrylic acid or methacrylic acid with C1-C12, preferably C1-C8, alcohols, which may be fluorinated, such as for example methyl acrylate, ethyl acrylate, propyl acrylate, n-butyl acrylate, isobutyl acrylate, 2-ethylhexyl acrylate, t-butyl acrylate, methyl methacrylate, ethyl methacrylate, n-butyl methacrylate, isobutyl methacrylate,
- vinyl nitriles containing 3 to 12 carbon atoms, particularly acrylonitrile or methacrylonitrile,
- vinyl esters of carboxylic acids, such as vinyl acetate, vinyl versatate, or vinyl propionate, and
- vinyl halides, for example vinyl chloride,
- diene monomers, for example butadiene or isoprene.

7. Use according to claim 6, **characterised in that** the monomer units present within the hydrophobic block (H) of the block copolymer used are esters of acrylic acid with straight or branched chain C₁-C₈ and in particular C₁-C₄ alcohols, such as for example methyl acrylate, ethyl acrylate, propyl acrylate, butyl acrylate or 2-ethylhexyl acrylate, or styrene derivatives such as styrene.

8. Use according to any one of the preceding claims, **characterised in that** the block copolymer used is a poly (acrylic acid) - poly (butyl acrylate) diblock copolymer.

9. Use according to claim 8, **characterised in that** the (acrylic acid)/(butyl acrylate) ratio by mass lies between 10:90 and 90:10.

10. Use according to any one of claims 1 to 7, **characterised in that** the block copolymer used is a diblock copolymer in which the hydrophilic block (h) is a poly(acrylic acid) and the hydrophobic block (H) is a statistical copolymer based on styrene and acrylic acid containing at least 25%, preferably 50% and even more preferably 75% by weight of acrylic acid in relation to the total weight of the mixture.

11. Use according to claim 10, **characterised in that** the (acrylic acid block)/(styrene block) ratio by mass lies between 95:5 and 60:40.

12. Use according to any one of the preceding claims, **characterised in that** the block copolymer used is obtained from a process of controlled free-radical polymerisation preferably using one or several compounds selected from dithioesters, dithioethersthiones, dithiocarbamates and xanthates as control agents, the said polymerisation being carried out in bulk, in solvent or in aqueous emulsion so as to obtain the copolymer directly in the form of an aqueous or water-alcohol solution.

13. Use according to claim 12, **characterised in that** the concentration of the block copolymer in the aqueous film-forming composition is between 0.001 and 10% by mass in relation to the total mass of the dry extract of the aqueous film-forming composition.

14. Use according to claim 13, **characterised in that** the concentration of the block copolymer in the aqueous film-forming composition is between 0.005 and 4% by mass in relation to the total mass of the dry extract of the aqueous film-forming composition.

15. Use according to claim 14, **characterised in that** the concentration of the block copolymer in the aqueous film-forming composition is between 0.01 and 1% by mass in relation to the total mass of the dry extract of the aqueous film-forming composition.

16. Aqueous film-forming composition comprising a block copolymer as defined in any one of claims 4 to 15, the said composition being an adhesive composition, a paint composition, or a sealant composition which may contain a silicone.

## Patentansprüche

1. Verwendung eines Blockcopolymers mit amphiphilem Charakter, umfassend mindestens einen hydrophoben Block und mindestens einen hydrophilen Block, wobei der hydrophobe Block hydrophile Einheiten in einer Menge zwischen 0 und 95 Gew.-%, bezogen auf das Gesamtgewicht der Einheiten des hydrophoben Blocks umfasst, wobei das Copolymer gegebenenfalls in einem Lösemittel gebracht, wie einem organischen Lösemittel, Wasser oder einer Mischung aus Wasser und Alkohol, in Lösung gebracht vorliegt, in einer wässrigen filmbildenden Zusammensetzung zum Aufrechterhalten oder Verbessern der Adhäsion der Zusammensetzung auf einer Oberfläche mit geringer Energie.

2. Verwendung nach Anspruch 1 , **dadurch gekennzeichnet, dass** die Oberfläche mit geringer Energie eine Oberfläche ist, welche einen Kontaktwinkel eines Wassertropfens von größer als 45 aufweist, wobei der Kontaktwinkel einem Winkel entspricht, der zwischen der Oberfläche und der Tangente des Tropfens an der Zwischenschicht Oberfläche/Wasser/Luft gebildet wird.

3. Verwendung nach einem der vorherigen Ansprüche, **dadurch gekennzeichnet, dass** die Oberfläche mit geringer Energie eine Oberfläche auf Basis eines Polyamids, eines Polycarbonats, eines Polyethylenterephthalats, eines Polymethylmethacrylots, eines Polypropylens, eines Polyethylens, eines Polystyrols, eines Polyesters, eines Acrylnitril-Butadien-Styrols (ABS) oder eines Polyvinylchlorids ist.

4. Verwendung nach einem der vorhergehenden Ansprüche, **dadurch gekennzeichnet, dass** das verwendete Blockcopolymer so ausgebildet ist, dass sein hydrophiler Block (h) zumindest teilweise aus Monomereinheiten aufgebaut ist, welche ausgewählt werden aus:
- den ethylenisch ungesättigten Mono- und Dicarbonsäuren, wie Acrylsäure, Methacrylsäure, Itaconsäure, Maleinsäure oder Fumarsäure,
- den ethylenisch ungesättigten Monoalkylestern der zuvor erwähnten Dicarbonsäuren, vorzugsweise mit (C₁-C₄)-Alkoholen, sowie deren N-substituierten Derivate, wie zum Beispiel dem 2-Hydroxyethylacrylat oder -methacrylat,
- den Amiden der ungesättigten Carbonsäuren, wie dem Acrylamid, dem Metharylamid oder
- den ethylenischen Monomeren, enthaltend eine Harnstoffgruppe, wie dem Ethylmethacrylamidethylenharnstoff oder dem Ethylmethocrylatethylenharnstoff, oder
- den ethylenischen Monomeren, welche mindestens eine Phosphat- oder Phosphonatsäuregruppe enthalten, wie die Vinylphosphonsäure oder die Vinylidenphosphonsäure oder
- den Acrylaten oder Methacrylaten von Polyethylenglykolphosphaten oder den Acrylaten oder Methacrylaten von Polypropylenglykolphosphaten oder
- den ethylenischen Monomeren, welche eine Sulfonsäuregruppe oder eines ihrer alkalischen oder Ammoniumsalze umfassen, wie zum Beispiel die Divinylsulfonsdure, die Divinylbenzolsulfonsdure, die Di-α-acrylamidomethylpropansulfonsäure oder das 2-Sulfoethylenmethacrylat, oder
- den kationischen Monomeren, welche ausgewählt sind aus den Aminoalkyl(meth)acrylaten, den Aminoalkyl(meth)acrylamiden; den Monomeren, welche mindestens eine sekundäre, tertiäre oder quaternäre Aminfunktion oder eine heterocyclische Gruppe, welche ein Stickstoffatom umfasst, umfassen, das Vinylamin, das Ethylenimin; die Ammoniumsalze von Diallyldialkyl; wobei diese Monomere allein oder in Kombination sowie in der Form der Salze verwendet werden können, wobei die Salze vorzugsweise ausgewählt sind aus der Sorte, dass das Gegenion ein Halogenid ist, wie zum Beispiel ein Chlorid; oder ein Sulfat, ein Hydrogensulfat, ein Alkylsulfat (zum Beispiel umfassend 1 bis 6 Kohlenstoffatome), ein Phosphat, ein Citrat, ein Formiat, ein Acetat, wie das Methylaminoethyl(meth)acrylat, das Dimethylaminopropyl(meth)acrylat, das Di-tert,-butylaminoethyl(meth)acrylat, das Dimethylaminomethyl(meth)acrylamid, das Dimethylaminopropyl(meth)acrylamid; das Ethylenimin, das Vinylamin, das 2-Vinylpyridin, das 4-Vinylpyridin, das Chlorid des Trimethylammoniumethyl(meth)acrylats, das Methylsulfat des Trimethylammoniumethylacrylats, das Chlorid des Benzyldimethylammoniumethyl(meth)acrylats, das Chlorid des 4-Benzoylbenzyldimethylammoniumethylacrylats, das Chlorid des Trimethylammoniumethyl(meth)acrylamids, das Chlorid des Trimethylammoniumvinylbenzols; das Chlorid des Ammoniumdiallyldimethyls, jeweils alleine oder in Mischung, oder deren entsprechenden Salze, oder
- einem vinylischer Alkohol, welcher beispielsweise aus der Hydrolyse eines Vinylpolyacetats resultiert, oder
- den cyclischen Amiden des Vinylamins, wie n-Vinylpyrrolidon, oder
- einem hydrophilen Monomer, welches aus einer chemischen Modifikation eines hydrophoben Blockes zum Beispiel durch Hydrolyse eines Polyacrylatalkyls einer Acrylsäure, stammt.

5. Verwendung nach Anspruch 4, **dadurch gekennzeichnet, dass** die Monomereinheiten, welche im hydrophilen Block (h) des verwendeten Blockcopolymers zugegen sind, Einheiten der Acrylsäure (AA), der 2-Acrylamido-2-methylpropansulfonsäure (AMPS), des Styrolsulfonats (SS), Harnstoffgruppen enthaltenden Monomere, Phosphat oder Phosponat enthaltenden Monomere oder deren Mischungen sind.

6. verwendung nach einem der vorhergehenden Ansprüche, **dadurch gekennzeichnet, dass** das verwendete Blockcopolymer so ausgebildet ist, dass sein hydrophober Block (H) zumindest teilweise aus Monomereinheiten aufgebaut ist, welche ausgewählt werden aus:
- den Styrol-Derivatmonomeren, wie Styrol, α-Methylstyrol, p-Methylstyrol oder dem p-tert.-Butylstyrol oder
- den Estern der Acrylsäure oder der Methacrylsäure mit (C₁-C₁₂)-Alkoholen, vorzugsweise (C₁-C₈)-Alkoholen, welche gegebenenfalls fluoriert sind, wie zum Beispiel Methylacrylat, Ethylacrylat, Propylacrylat, n-Butylacrylat, Isobutylacrylat, 2-Ethylhexylacrylat, tert.-Butylacrylat, Methylmethacrylat, Ethylmethacrylat, n-Butylmethacrylat, Isobutylmethacrylat,
- den Vinyinitrilen, welche 3 bis 12 Kohlenstoffatome enthalten, und insbesondere Acrylnitril oder Methacrylnitril,
- Vinylestern der Carbonsäuren wie Vinylacetat, Vinylversatat oder Vinylpropionat, und
- Vinylhalogeniden, wie zum Beispiel Vinylchlorid;
- Dienmonomeren, wie zum Beispiel Butadien oder Isopren.

7. Verwendung nach Anspruch 6, **dadurch gekennzeichnet, dass** die Monomereinheiten, welche in dem hydrophoben Block (H) des verwendeten Blockcopolymers zugegen sind, Ester der Acrylsäure mit linearen oder verzweigten (C₁-C₈)-Alkoholen, vorzugsweise (C₁-C₄)-Alkoholen, wie zum Beispiel Methylacrylat, Ethylacrylat, Propylacrylat, Butylacrylat oder 2-Ethylhexylacrylat, oder Styrol-Derivate, wie Styrol, sind.

8. Verwendung nach einem der vorherigen Ansprüche, **dadurch gekennzeichnet, dass** das verwendete Blockcopolymer ein Polyacrylsäure-Polybutylacrylat-Diblockcopolymer ist.

9. Verwendung nach Anspruch 8, **dadurch gekennzeichnet, dass** das Massenverhältnis Acrylsäure/Butylacrylat zwischen 10 : 90 und 90 : 10 liegt.

10. Verwendung nach einem der Ansprüche 1 bis 7, **dadurch gekennzeichnet, dass** das verwendete Blockcopolymer ein Diblockcopolymer ist, in welchem der hydrophile Block (h) eine Polyacrylsäure ist und der hydrophobe Block (H) ein statistisches Copolymer auf der Basis von Styrol und Acrylsäure ist, welches mindestens 25 Gew.-%, vorzugsweise 50 Gew.-%, noch weiter bevorzugt 75 Gew.-%, an Acrylsäure im Verhältnis zu dem Gesamtgewicht der Mischung enthält.

11. Verwendung nach Anspruch 10, **dadurch gekennzeichnet, dass** das Gewichtsverhältnis des Blocks der Acrylsäure zu dem Block des Styrols zwischen 95 : 5 und 60 : 40 liegt.

12. Verwendung nach einem der vorherigen Ansprüche, **dadurch gekennzeichnet, dass** das verwendete Blockcopolymer erhalten wird durch ein Verfahren der radikalisch kontrollierten Polymerisation unter Verwendung von vorzugsweise einer oder mehrerer Verbindungen, welche ausgewählt sind aus Dithioestern, Thioetherthionen, Dithiocarbamaten und Xanthaten als Steuerungsmittel, und wobei die Polymerisation insbesondere in der Masse, in Lösung oder in einer wässrigen Emulsion durchgeführt wird, so dass das Copolymer direkt in einer wässrigen Lösung oder einer Lösung aus Wasser und Alkohol erhalten wird.

13. Verwendung nach Anspruch 12, **dadurch gekennzeichnet, dass** die Konzentration des Blockcopolymers in der wässrigen filmbildenden Zusammensetzung zwischen 0,001 und 10 Massen-%, bezogen auf die Gesamtmasse der Trockenextrakte der wässrigen filmbildenden Zusammensetzung, ist.

14. Verwendung nach Anspruch 13, **dadurch gekennzeichnet, dass** die Konzentration des Blockcopolymers in der wässrigen filmbildenden Zusammensetzung zwischen 0,005 und 5 Massen-%, bezogen auf die Gesamtmasse der Trockenextrakte der wässrigen filmbildenden Zusammensetzung, ist.

15. Verwendung nach Anspruch 14, **dadurch gekennzeichnet, dass** die Konzentration des Blockcopolymers in der wässrigen filmbildenden Zusammensetzung zwischen 0,01 und 1 Massen-%, bezogen auf die Gesamtmasse der Trockenextrakte der wässrigen filmbildenden Zusammensetzung, ist.

16. Wässrige filmbildende Zusammensetzung, enthaltend ein Blockcopolymer wie in einem der Ansprüche 4 bis 15 definiert, wobei die Zusammensetzung eine Haft-Zusammensetzung, eine Farb-Zusammensetzung oder eine gegebenenfalls silikonhaltige Grundier-Zusammensetzung ist.
